# EUROPÄISCHE PATENTSCHRIFT

(11) **EP 3 263 856 B1**
(45) Veröffentlichungstag und Bekanntmachung des Hinweises auf die Patenterteilung: **31.03.2021**
(21) Anmeldenummer: 17176528.2
(22) Anmeldetag: 19.06.2017
(51) Int. Cl.: F01N 1/18, F02D 9/10, F16K 1/226, F02D 9/04, F16K 1/22, F01N 1/16, F02M 26/70

(54) **ABGASKLAPPE**
EXHAUST FLAP
PAPILLON D'ÉCHAPPEMENT

(30) Priorität: 27.06.2016 DE 102016111681
(43) Veröffentlichungstag der Anmeldung: 03.01.2018
(73) Patentinhaber: Eberspächer Exhaust Technology GmbH & Co. KG, 66539 Neunkirchen (DE)
(72) Erfinder: Varelis, Stefanos, 70771 Leinfelden (DE); Schmitt, Steffen, 73760 Ostfildern (DE)
(74) Vertreter: Ruttensperger Lachnit Trossin Gomoll

(56) Entgegenhaltungen:
- DE-A1-102008 034 341
- DE-T5-112010 005 713
- FR-A- 1 150 573
- US-A- 4 032 108

## Beschreibung

Die vorliegende Erfindung betrifft eine Abgasklappe, insbesondere für den Abgasstrom einer Brennkraftmaschine, umfassend ein Klappenrohr, eine im Inneren des Klappenrohrs an einer um eine Schwenkachse drehbaren Schwenkwelle getragene Klappenblende mit wenigstens einem Klappenflügel und einem die Schwenkwelle wenigstens bereichsweise umgreifenden Anbringungsbereich, wobei an einem Innenumfangsbereich des Klappenrohrs in Zuordnung zu wenigsten einem Klappenflügel ein Flügelanschlag vorgesehen ist,

Derartige Abgasklappen werden dazu eingesetzt, Abgasanlagen, beispielsweise einer Brennkraftmaschine in einem Kraftfahrzeug, zur Durchströmung für Abgas freizugegeben bzw. gegen Durchströmung zu sperren oder teilweise zu sperren. Insbesondere dann, wenn die Klappenblende einer derartigen Abgasklappe in ihrer Sperrstellung ist, kann durch zwischen der Klappenblende bzw. der diese tragenden Schwenkwelle und dem Klappenrohr gebildete Zwischenräume Abgas hindurchströmen, wobei Störgeräusche entstehen können bzw. wodurch eine eine derartige Abgasklappe aufweisende Abgasanlage eine nicht ausreichende akustische Dichtigkeit aufweisen kann.

Aus der FR 1 150 573 A ist ein Klappenventil bekannt, bei welchem in einem Klappenrohr an einer daran um eine Schwenkwelle drehbar getragenen Schwenkachse eine Klappenblende mit zwei Klappenblendensteilen jeweils mit einem Anbringungsbereichsabschnitt eines Anbringungsbereichs der Klappenblende und einem Klappenflügel getragen sind. In Zuordnung zu jedem Klappenflügel ist am Innenumfang des Klappenrohrs ein Flügelanschlag vorgesehen.

Die DE 10 2008 034 341 A1 offenbart eine Abgasklappe mit einer zwei Klappenflügel aufweisenden Klappenblende, die in einem Klappenrohr schwenkbar getragen ist. Die DE 11 2010 005 713 T5 offenbart ein Schmetterlingsventil mit einer in einem Klappenrohr schwenkbar getragenen Klappenblende. Die Klappenblende umfasst einen eine Schwenkwelle umgebend angeordneten, rohrartigen Anbringungsbereich, von welchem Klappenflügel in zueinander entgegengesetzter Richtung abstehen.

Es ist die Aufgabe der vorliegenden Erfindung, eine Abgasklappe, insbesondere für den Abgasstrom einer Brennkraftmaschine, vorzusehen, bei welcher bei baulich einfacher Ausgestaltung insbesondere bei in einer Sperrstellung positionierter Klappenblende Zwischenräume zwischen der Klappenblende bzw. einer diese tragenden Schwenkwelle und einem Klappenrohr weitestgehend vermieden werden.

Erfindungsgemäß wird diese Aufgabe gelöst durch eine Abgasklappe, insbesondere für den Abgasstrom einer Brennkraftmaschine, gemäß Anspruch 1. Diese umfasst ein Klappenrohr, eine im Inneren des Klappenrohrs an einer um eine Schwenkachse drehbaren Schwenkwelle getragene Klappenblende mit wenigstens einem Klappenflügel, vorzugsweise zwei Klappenflügeln, und einem die Schwenkwelle wenigstens bereichsweise umgreifenden Anbringungsbereich, wobei an einem Innenumfangsbereich des Klappenrohrs in Zuordnung zu wenigsten einem Klappenflügel, vorzugsweise jedem Klappenflügel, ein Flügelanschlag vorgesehen ist, wobei in beiden axialen Endbereichen des Anbringungsbereichs, bezogen auf die Schwenkachse der Schwenkwelle, eine einen Umfangsendbereich, bezogen auf den Innenumfang des Klappenrohrs bzw. eine Klappenrohr-Längsachse, eines Flügelanschlags aufnehmende Aussparung an der Klappenblende vorgesehen ist.

Die Klappenblende umfasst zwei Klappenblendenteile, wobei jedes Klappenblendenteil einen Klappenflügel und einen die Schwenkwelle bereichsweise umgreifenden Anbringungsbereichsabschnitt umfasst, wobei in Zuordnung zu jedem Klappenflügel am Innenumfang des Klappenrohrs ein Flügelanschlag vorgesehen ist. Bei derartiger Ausgestaltung der Klappenblende mit zwei Klappenblendenteilen wird der Aufbau dadurch vereinfacht, dass die beiden Klappenblendenteile zueinander im Wesentlichen baugleich sind.

Um zu gewährleisten, dass bei Verschwenken der Klappenblende von ihrer Sperrstellung in Richtung zu einer Freigabestellung und dabei Bewegen eines jeweiligen Klappenflügels weg von seinem Flügelanschlag die Anbringungsbereichsabschnitte der Klappenblendenteile nicht an den den jeweils anderen Klappenblendenteilen zugeordneten Flügelanschlägen anstoßen, ist in beiden axialen Endbereichen des Anbringungsbereichsabschnitts von jedem der Klappenblendenteile jeweils eine Aussparung zur Aufnahme eines dem Klappenflügel des anderen Klappenblendenteils zugeordneten Flügelanschlags vorgesehen.

Bei der erfindungsgemäßen Abgasklappe wird durch baulich einfache Maßnahmen dafür gesorgt, dass ein im Angrenzungsbereich eines Flügelanschlags an die die Klappenblende tragende Schwenkwelle unvermeidbar bestehender Zwischenraum dadurch verringert werden kann, dass der Flügelanschlag näher an die Schwenkwelle herangeführt wird bzw. dass dieser Zwischenraum durch einen Klappenflügel überdeckt werden kann.

Um insbesondere bei in einer Sperrstellung positionierter Klappenblende einen zuverlässigen, im Wesentlichen vollständigen Abschluss des Klappenrohrs zu gewährleisten, wird vorgeschlagen, dass die Schwenkwelle in ihren beiden axialen Endbereichen am Klappenrohr um die Schwenkachse drehbar getragen ist, und dass zwei Flügelanschläge, sich in Umfangsrichtung von einem im Bereich eines ersten axialen Endbereichs der Schwenkwelle positionierten ersten Umfangsendbereich vorzugsweise unterbrechungsfrei zu einem im Bereich eines zweiten axialen Endbereichs der Schwenkwelle positionierten zweiten Umfangsendbereich erstrecken und eine Anschlagfläche zur Anlage eines zugeordneten Klappenflügels aufweisen.

Das Hindurchströmen von Abgas durch einen zwischen einem Flügelanschlag und der Schwenkwelle gebildeten Zwischenraum kann vorzugsweise dadurch weitestgehend unterbunden werden, dass jeder Flügelanschlag in seinen Umfangsendbereichen einen Umfangsabstand zu dem zugeordneten axialen Endbereich der Schwenkwelle aufweist, und dass ein durch diesen Umfangsabstand gebildeter Zwischenraum zwischen der Schwenkwelle und dem Flügelanschlag durch einen Klappenflügel bei an der Anschlagfläche dieses Flügelanschlags anliegendem Klappenflügel in Umfangsrichtung im Wesentlichen vollständig überdeckt ist.

Diese Abdeckfunktionalität kann gemäß den Prinzipien der vorliegenden Erfindung beispielsweise dadurch erreicht werden, dass in beiden axialen Endbereichen des Anbringungsbereichs jeder Klappenflügel sich in axialer Richtung über den Anbringungsbereich im Bereich seiner Aussparung hinaus erstreckt oder/und sich bis an den Außenumfang der Schwenkwelle heran erstreckt.

Vorzugsweise sind die Aussparungen in axialer Richtung bezüglich der Schwenkachse und in Umfangsrichtung in Richtung auf das andere Klappenblendenteil zu offen.

Um eine symmetrische Ausgestaltung bezüglich der Schwenkachse bzw. der die Klappenblendenteile tragenden Schwenkwelle erreichen zu können, umgreifen die Anbringungsbereichsabschnitte der beiden Klappenblendenteile die Schwenkwelle an einander im Wesentlichen gegenüberliegenden Umfangsbereichen. Ferner kann hierfür vorgesehen sein, dass die Klappenflügel der beiden Klappenblendenteile bei an den zugeordneten Flügelanschlägen anliegenden Klappenflügeln in Richtung einer Klappenrohr-Längsachse zueinander versetzt angeordnet sind.

Dabei kann ferner vorgesehen sein, dass die in Zuordnung zu den beiden Klappenflügeln vorgesehenen Flügelanschläge an beiden Umfangsseiten bezüglich der Schwenkwelle in Richtung der Klappenrohr-Längsachse im Wesentlichen nicht zueinander versetzt angeordnet sind und an einander in Richtung der Klappenrohr-Längsachse entgegengesetzten Seiten jeweils eine Anschlagfläche für den zugeordneten Klappenflügel bereitstellen.

Die vorliegende Erfindung wird nachfolgend mit Bezug auf die beiliegenden Figuren detailliert beschrieben. Es zeigt:
- Fig. 1: eine Seitenansicht einer Abgasklappe für eine Abgasanlage einer Brennkraftmaschine mit einem Klappenantrieb,
- Fig. 2: die Abgasklappe der Fig. 1 in perspektivischer Ansicht;
- Fig. 3: eine Schnittdarstellung der Abgasklappe der Fig. 1, geschnitten längs einer Linie III-III in Fig. 1;
- Fig. 4: eine Detailansicht der Abgasklappe der Fig. 1 im Angrenzungsbereich einer eine Klappenblende tragenden Schwenkwelle an ein Klappenrohr der Abgasklappe;
- Fig. 5: eine der Fig. 4 entsprechende Darstellung einer nicht erfindungsgemäßen Ausgestaltungsform.

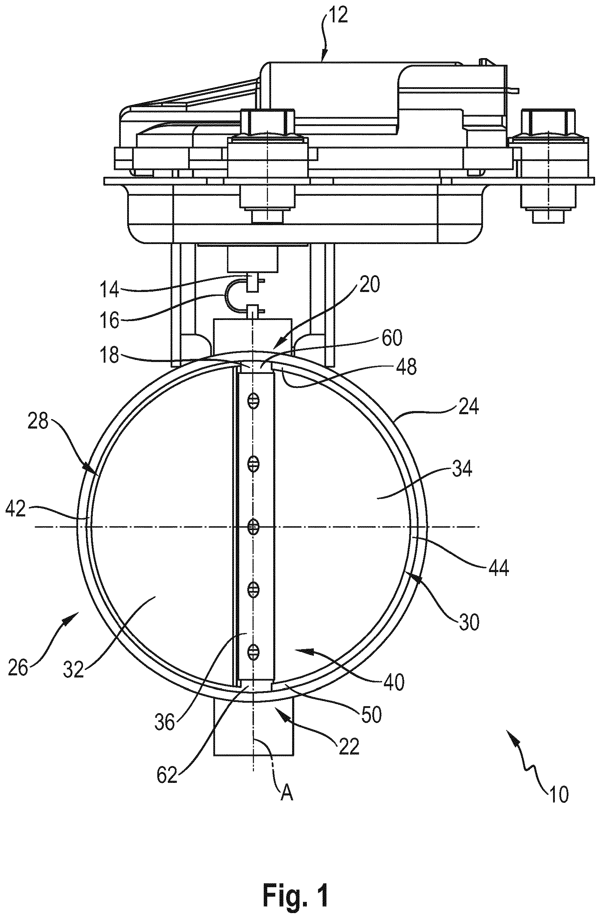

In Fig. 1 ist eine beispielsweise in einer Abgasanlage einer Brennkraftmaschine einsetzbare Abgasklappe allgemein mit 10 bezeichnet. Der Abgasklappe 10 ist ein beispielsweise elektromotorisch arbeitender Klappenantrieb 12 zugeordnet. Ein Antriebsorgan 14, beispielsweise Antriebswelle, des Klappenantriebs 12 ist über ein beispielsweise als Bügelfeder aus Drahtmaterial aufgebautes Kopplungselement 16 zur gemeinsamen Drehung mit einer Schwenkwelle 18 der Abgasklappe 10 gekoppelt. Die Schwenkwelle 18 ist in ihren beiden Endbereichen 20, 22 über nicht dargestellte Lager an einem Klappenrohr 24 um eine Schwenkachse A schwenkbar getragen.

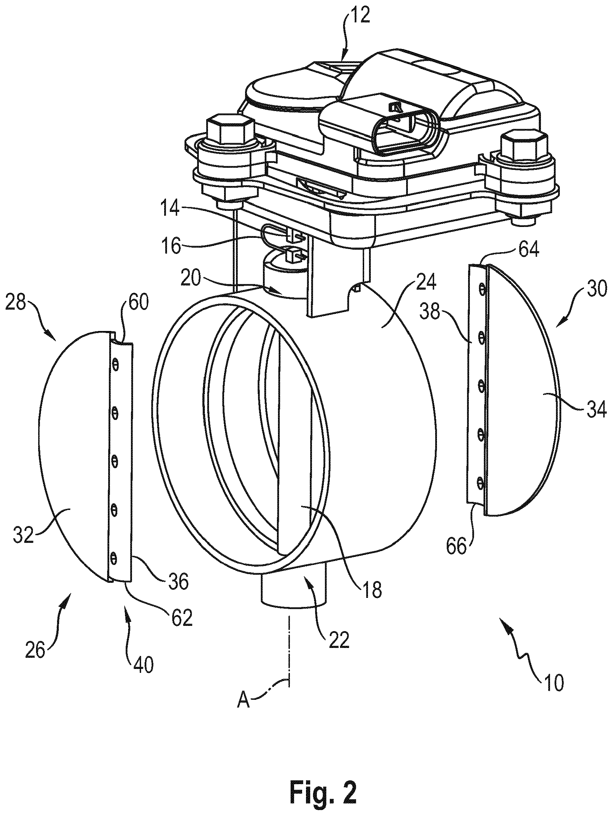

An der Schwenkwelle 18 ist im Inneren des in diesem Ausgestaltungsbeispiel mit im Wesentlichen kreisrundem Querschnitt und entsprechend kreisrunder Innenkontur ausgestalteten Klappenrohrs 24 eine allgemein mit 26 bezeichnete Klappenblende getragen. In dem Ausgestaltungsbeispiel der Fig. 1 bis 4 umfasst die Klappenblende 26 zwei z.B. einstückig ausgebildete Klappenblendenteile 28, 30. Jedes der beiden Klappenblendenteile 28, 30 wiederum umfasst einen Klappenflügel 32, 34 sowie einen Anbringungsbereichsabschnitt 36, 38. Jeder der beiden Anbringungsbereichsabschnitte 36, 38 ist, angepasst an die Außenkontur der Schwenkwelle 18, gekrümmt ausgebildet und umgreift die Schwenkwelle 18 jeweils in einem Teilbereich von deren Außenumfang. Die beiden Anbringungsbereichsabschnitte 36, 38 bilden somit zusammen einen Anbringungsbereich 40 für die Klappenblende 26. In diesem Anbringungsbereich 40 bzw. im Bereich der Anbringungsbereichsabschnitte 36 ,38 können die Klappenblendenteile 28, 30 beispielsweise durch Verschweißung an der Schwenkwelle 18 angebracht werden.

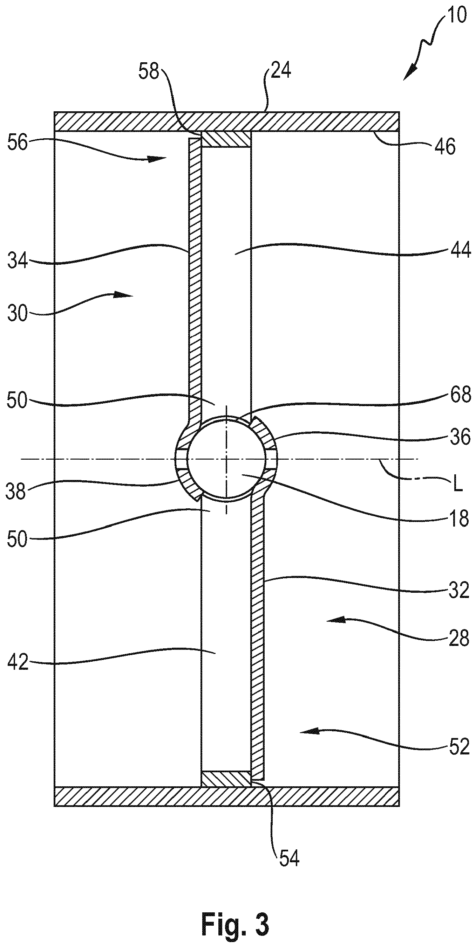

In Zuordnung zu jedem der beiden Klappenflügel 32, 34 bzw. jedem Klappenblendenteil 28, 30 ist am Klappenrohr 24 ein ringsegmentartig ausgebildeter Flügelanschlag 42, 44 vorgesehen. Die beiden Flügelanschläge 42, 44 können am Innenumfang 46 des Klappenrohrs 24 beispielsweise materialschlüssig festgelegt sein, können mit dem Klappenrohr 24 jedoch auch als integraler Bestandteil desselben bereitgestellt sein. Wie in Fig. 1 beispielsweise anhand des Flügelanschlags 44 veranschaulicht, erstreckt sich dieser unterbrechungsfrei entlang des Innenumfangs 46 des Klappenrohrs 24 ausgehend von einem dem ersten axialen Endbereich 20 der Schwenkwelle 18 nahe liegenden ersten Umfangsendbereich 48 zu einem dem zweiten axialen Endbereich 22 der Schwenkwelle 18 nahe liegenden zweiten Umfangsendbereich 50. An einer in Richtung einer Klappenrohr-Längsachse L orientierten Seite 52 stellt der Flügelanschlag 42 eine Anschlagfläche 54 für den Klappenflügel 28 bereit. Entsprechend stellt der Flügelanschlag 44 an seiner in Richtung der Klappenrohr-Längsachse L orientierten Stirnseite 56 eine Anschlagfläche 58 für den Klappenflügel 34 bereit. Man erkennt in Fig. 3, dass die beiden Flügelanschläge 42, 44 im Wesentlichen im gleichen axialen Bereich, bezogen auf die Klappenrohr-Längsachse, angeordnet sind, so dass die beiden Anschlagflächen 54, 58, welche in Richtung voneinander weg orientiert sind, in Richtung der Klappenrohr-Längsachse L zueinander versetzt liegen.

Um im Angrenzungsbereich der Umfangsendbereiche 48, 50 an die Schwenkwelle 18 möglichst geringe Zwischenräume zu belassen, ist in diesen Umfangsendbereichen 48, 50 jeder der Flügelanschläge 42, 44 möglichst nahe an die Schwenkwelle 18 herangeführt. Um dies zu ermöglichen, weist die Klappenblende 26 bzw. jedes Klappenblendenteil 28, 30 im jeweiligen Anbringungsbereichsabschnitt 36, 38 an den in Richtung der Schwenkachse A orientiert liegenden Endbereichen desselben eine Aussparung 60, 62, 64, 66 auf. Diese Aussparung kann dadurch bereitgestellt werden, dass die Anbringungsbereichsabschnitte 36, 38 in Richtung der Schwenkachse A kürzer sind, als die mit diesen jeweils verbundenen Klappenflügel 32, 34. Dies bedeutet, dass in den axialen Endbereichen der Klappenblendenteile 28, 30 die Klappenflügel 32, 34 axial über denjenigen Bereich der Anbringungsbereichsabschnitte 36, 38 überstehen, in welchen die Aussparungen 60, 62, 64, 66 bereitgestellt sind.

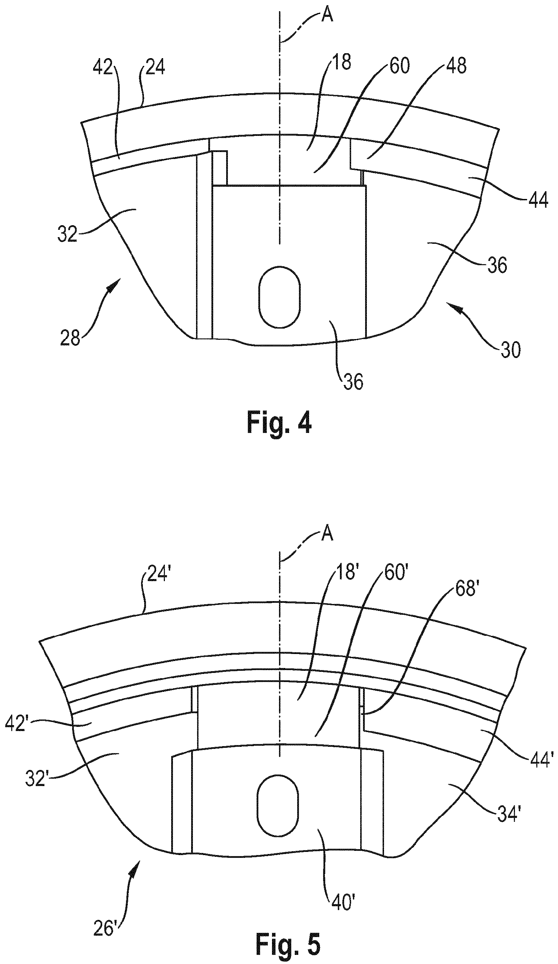

In Fig. 1 und in Fig. 4 ist zu erkennen, dass der Flügelanschlag 44 sich mit seinem ersten Umfangsendbereich 48 so nahe an die Schwenkwelle 18 heran erstreckt, dass der erste Umfangsendbereich 48 in die in diesem Bereich vorhandene Aussparung 60 des Klappenblendenteils 28 eingreift, zumindest dann, wenn durch Verdrehen der Schwenkwelle 18 um die Schwenkachse A auch das Klappenflügelteil 28 bzw. dessen Anbringungsbereichsabschnitt 36 um die Schwenkachse A verschwenkt und der Klappenflügel 32 des Klappenflügelteils 28 sich in Umfangsrichtung, bezogen auf die Schwenkachse A, dem ersten Umfangsendbereich 48 des Flügelanschlags 44 annähert. Da der in Fig. 4 hinter dem Flügelanschlag 44 liegende und mit diesem zusammenwirkende Klappenflügel 34 des Klappenflügelteils 30 sich bis an die Schwenkwelle 18 heran erstreckt, ist ein gleichwohl unvermeidbar zwischen dem ersten Umfangsendbereich 48 des Flügelanschlags 44 und der Schwenkwelle 18 gebildeter Zwischenraum 68 in Umfangsrichtung im Wesentlichen vollständig durch den Klappenflügel 34 überdeckt. Um diesen Zwischenraum 68 möglichst klein zu halten, kann in seinem ersten Umfangsendbereich 48 der Flügelanschlag 44, an die kreisartige Außenumfangskontur der Schwenkwelle 18 angepasst, konkav ausgebildet sein und somit die Schwenkwelle 18 in Umfangsrichtung bereichsweise umgeben.

Die vorangehend mit Bezug auf den ersten Umfangsendbereich 48 des Flügelanschlags 44 dargestellte Funktionalität ist in entsprechender Weise auch bei allen anderen Umfangsendbereichen der Flügelanschläge 42, 44 realisiert. Es wird somit dafür gesorgt, dass insbesondere im Angrenzungsbereich der Flügelanschläge 42, 44 an die Schwenkwelle 18 in der in Fig. 1 bzw. auch in Fig. 3 dargestellten Sperrstellung der Klappenblende 26, in welcher die beiden in Richtung der Klappenrohr-Längsachse L zueinander versetzt angeordneten Klappenflügel 32, 34 an ihren zugeordneten Anschlagflächen 54, 58 anliegen und somit das Klappenrohr 24 im Wesentlichen gegen Durchströmung sperren, möglichst geringe Strömungsleckagen auftreten. Dies vermeidet einerseits Störgeräusche und stellt andererseits einen im Wesentlichen geräuschdichten Aufbau bereit. Die Ausgestaltung der Klappenblende 26 mit zwei Klappenblendenteilen 28, 30 ermöglicht ferner einen Toleranzausgleich zwischen den Klappenblendenteilen 28, 30 und den diesen zugeordneten Flügelanschlägen 42, 44, wenn beim Zusammenbau die Klappenblendenteile 28, 30 mit ihren Anbringungsbereichsabschnitten 36, 38 angebracht werden. Dabei können die Klappenblendenteile 28, 30 mit ihren Klappenflügeln 32, 34 an den zugeordneten Flügelanschlägen 42, 44 anliegend positioniert und nachfolgend im Wesentlichen unabhängig voneinander mit der Schwenkwelle 18 verbunden werden.

Eine nicht erfindungsgemäße Ausgestaltungsart ist in Fig. 5 dargestellt. Die Fig. 5 zeigt einen Aufbau, bei welchem die Klappenblende 26' einteilig ausgebildet ist. Die Klappenblende 26' umfasst einen rohrartigen und die Schwenkwelle 18' umgebend angeordneten Anbringungsbereich 40', von welchem sich beidseits der Schwenkwelle 18' die Klappenflügel 32', 34' erstrecken. In den axialen Endbereichen erstrecken die Klappenflügel 32', 34' sich über den Anbringungsbereich 40' hinaus, so dass in den zwischen den beiden Klappenflügeln 32', 34' liegenden Bereichen jeweils Aussparungen, in Fig. 5 anhand einer Aussparung 60' erkennbar, gebildet sind. In diese Aussparungen erstrecken die Umfangsendbereiche, in Fig. 5 erkennbar anhand des ersten Umfangsendbereichs 48' des Flügelanschlags 44', sich hinein, bis nahe an die Schwenkachse 18' heran, so dass dazwischen der Zwischenraum 68' gebildet ist. Dieser Zwischenraum 68' ist durch den Klappenflügel 34', welcher in der Fig. 5 hinter dem Flügelanschlag 44' liegt, überdeckt, wobei der Klappenflügel 34', sich in seinem axial über den Anbringungsbereich 40' hinaus erstreckenden Bereich bis an den Außenumfang der Schwenkwelle 18' heran erstreckt. Diese Konfiguration kann im Angrenzungsbereich jedes Umfangsendbereichs der beiden Flügelanschläge 42', 44' an die Schwenkwelle 18' vorgesehen sein. Vorzugsweise liegen dabei die beiden Klappenflügel 32', 34' in einer Ebene, sind also bei Positionierung der Klappenblende 26' in der Sperrstellung, bezogen auf die Klappenrohr-Längsachse, nicht versetzt zueinander. Daher ist es erforderlich, die beiden Flügelanschläge 42', 44' bzw. die an diesen bereitgestellten Anschlagflächen entsprechend axial versetzt zueinander, jedoch einander zugewandt orientiert, anzuordnen.

Auch mit dem in Fig. 5 dargestellten Aufbau wird die Möglichkeit geschaffen, die Flügelanschläge in ihren Umfangsendbereichen sehr nahe an die Schwenkwelle 18' heranzuführen und einen dazwischen gebildeten Zwischenraum 68' in Umfangsrichtung, bezogen auf die Klappenrohr-Längsachse, und in Richtung der Schwenkachse A der Schwenkwelle 18' nahezu vollständig zu überdecken.

## Patentansprüche

1. Abgasklappe, insbesondere für den Abgasstrom einer Brennkraftmaschine, umfassend ein Klappenrohr (24), eine im Inneren des Klappenrohrs (24) an einer um eine Schwenkachse (A) drehbaren Schwenkwelle (18) getragene, zwei zueinander baugleiche Klappenblendenteile (28, 30) umfassende Klappenblende (26) und einem die Schwenkwelle (18) umgreifenden Anbringungsbereich (40), wobei jedes Klappenblendenteil (28, 30) einen Klappenflügel (32, 34) und einen angepasst an eine Außenkontur der Schwenkwelle (18) gekrümmt ausgebildeten, die Schwenkwelle (18) in einem Teilbereich ihres Außenumfangs an einander gegenüberliegenden Umfangsbereichen umgreifenden Anbringungsbereichsabschnitt (36, 38) des Anbringungsbereichs (40) der Klappenblende (26) umfasst, wobei die Anbringungsbereichsabschnitte (36, 38) der Klappenblendenteile (28, 30) zusammen den Anbringungsbereich (40) der Klappenblende (26) bilden, und wobei die Klappenblendenteile (28, 30) in den Anbringungsbereichsabschnitten (36, 38) an der Schwenkwelle (18) angebracht sind, wobei in Zuordnung zu jedem Klappenflügel (32, 34) am Innenumfang (46) des Klappenrohrs (24) ein Flügelanschlag (42, 44) vorgesehen ist, wobei in beiden axialen Endbereichen der Anbringungsbereichsabschnitte (36, 38) von jedem der beiden Klappenblendenteile (28, 30) jeweils eine Aussparung (60, 62, 64, 66) vorgesehen ist, wobei in jeder Aussparung (60, 62, 64, 66) ein Umfangsendbereich (48, 50) des dem Klappenflügel (32, 34) des anderen Klappenblendenteils (30, 28) zugeordneten Flügelanschlags (42, 44) aufgenommen ist.

2. Abgasklappe nach Anspruch 1, **dadurch gekennzeichnet, dass** die Schwenkwelle (18) in ihren beiden axialen Endbereichen (20, 22) am Klappenrohr (24) um die Schwenkachse (A) drehbar getragen ist, und dass zwei Flügelanschläge (42, 44), sich in Umfangsrichtung von einem im Bereich eines ersten axialen Endbereichs (20) der Schwenkwelle (18) positionierten ersten Umfangsendbereich (48) vorzugsweise unterbrechungsfrei zu einem im Bereich eines zweiten axialen Endbereichs (22) der Schwenkwelle (18) positionierten zweiten Umfangsendbereich (50) erstrecken und eine Anschlagfläche (54, 58) zur Anlage des zugeordneten Klappenflügels (32 34) aufweisen.

3. Abgasklappe nach Anspruch 2, **dadurch gekennzeichnet, dass** jeder Flügelanschlag (42, 44) in seinen Umfangsendbereichen (48, 50) einen Umfangsabstand zu dem zugeordneten axialen Endbereich (20, 22) der Schwenkwelle (18) aufweist, und dass ein durch diesen Umfangsabstand gebildeter Zwischenraum (68) zwischen der Schwenkwelle (18) und dem Flügelanschlag (42, 44) durch einen Klappenflügel (32, 34) bei an der Anschlagfläche (54, 58) dieses Flügelanschlags (42, 44) anliegendem Klappenflügel (32, 34) in Umfangsrichtung im Wesentlichen vollständig überdeckt ist.

4. Abgasklappe nach einem der vorangehenden Ansprüche, **dadurch gekennzeichnet, dass** in beiden axialen Endbereichen des Anbringungsbereichs (40) jeder Klappenflügel (32, 34) sich in axialer Richtung über den Anbringungsbereich (40) im Bereich seiner Aussparung (60, 62, 64, 66) hinaus erstreckt oder/und sich bis an den Außenumfang der Schwenkwelle (18) heran erstreckt.

5. Abgasklappe nach einem der vorangehenden Ansprüche, **dadurch gekennzeichnet, dass** die Aussparungen (60, 62 ,64, 66) in axialer Richtung bezüglich der Schwenkachse (A) und in Umfangsrichtung in Richtung auf das andere Klappenblendenteil (30, 28) zu offen sind.

6. Abgasklappe nach einem der vorangehenden Ansprüche, **dadurch gekennzeichnet, dass** die Klappenflügel (32, 34) der beiden Klappenblendenteile (28, 30) bei an den zugeordneten Flügelanschlägen (42, 44) anliegenden Klappenflügeln (32, 34) in Richtung einer Klappenrohr-Längsachse (L) zueinander versetzt angeordnet sind.

7. Abgasklappe nach Anspruch 6, **dadurch gekennzeichnet, dass** die in Zuordnung zu den beiden Klappenflügeln (32, 34) vorgesehenen Flügelanschläge (42, 44) an beiden Umfangsseiten bezüglich der Schwenkwelle (A) in Richtung der Klappenrohr-Längsachse (L) im Wesentlichen nicht zueinander versetzt angeordnet sind und an einander in Richtung der Klappenrohr-Längsachse (L) entgegengesetzten Seiten (52, 56) jeweils eine Anschlagfläche (54, 58) für den zugeordneten Klappenflügel (32, 34) bereitstellen.

## Claims

1. Exhaust gas flap, especially for the exhaust gas stream of an internal combustion engine, comprising a flap tube (24), a flap diaphragm (26), which is carried in the interior of the flap tube (24) on a pivot shaft (18) rotatable about a pivot axis (A), and which comprises two flap diaphragm parts (28, 30) with an identical design and comprising a mounting area (40) enclosing the pivot shaft (18), wherein each flap diaphragm part (28, 30) comprises a flap wing (32, 34) and a mounting area section (36, 38) of the mounting area (40) of the flap diaphragm (26) adapted with a curved configuration adapted to an outer contour of the pivot shaft (18), enclosing the pivot shaft (18) in some areas of its outer circumference at opposed circumferential areas, wherein the mounting area sections (36, 38) of the flap diaphragm parts (28, 30) together form the mounting area (40) of the flap diaphragm (26), and wherein the flap diaphragm parts (28, 30) are mounted in said mounting area sections (36, 38) at said pivot shaft (18), wherein a wing stop (42, 44) is provided at the inner circumference of the flap tube (24) in association with each flap wing (32, 34), wherein a respective recess (60, 62, 64, 66) is provided in both axial end areas of the mounting area sections (36, 38) of each of both flap diaphragm parts (28, 30), wherein a circumferential end area (48, 50) of the wing stop (42, 44) associated to the flap wing (32, 34) of the other flap diaphragm part (30, 28) is received in each recess (60, 62, 64, 66).

2. Exhaust gas flap in accordance with claim 1, **characterized in that** the pivot shaft (18) is carried rotatably about the pivot axis (A) in its two axial end areas (20, 22) at the flap tube (24), and that two wing stops (42, 44) extend preferably without interruption in the circumferential direction from a first circumferential end area (48), which is positioned in the area of a first axial end area (20) of the pivot shaft (18), to a second circumferential end area (50), which is positioned in the area of a second axial end area (22) of the pivot shaft (18), and have a stop surface (54, 58) for abutment of the associated flap wing (32, 34).

3. Exhaust gas flap in accordance with claim 2, **characterized in that** each wing stop (42, 44) in its circumferential end areas (48, 50) has a circumferential distance to the associated axial end area (20, 22) of the pivot shaft (18), and that a gap (68), which is formed by this circumferential distance between the pivot shaft (18) and the wing stop (42, 44), is essentially completely overlapped in the circumferential direction by a flap wing (32, 34) when the flap wing (32, 34) abuts at the stop surface (54, 58) of this wing stop (42, 44).

4. Exhaust gas flap in accordance with one of the preceding claims, **characterized in that** in both axial end areas of the mounting area (40), each flap wing (32, 34) extends in the axial direction beyond the mounting area (40) in the area of its recess (60, 62, 64, 66) or/and extends up to the outer circumference of the pivot shaft (18).

5. Exhaust gas flap in accordance with one of the preceding claims, **characterized in that** the recesses (60, 62, 64, 66) are open in the axial direction in relation to the pivot axis (A) and in the circumferential direction in the direction towards the other flap diaphragm part (30, 28).

6. Exhaust gas flap in accordance with one of the preceding claims, **characterized in that** the flap wings (32, 34) of the two flap diaphragm parts (28, 30) are arranged offset in relation to each other in the direction of a flap tube longitudinal axis (L), when the flap wings (32, 34) abut at the associated wing stops (42, 44).

7. Exhaust gas flap in accordance with claim 6, **characterized in that** the wing stops (42, 44) provided in association with the two flap wings (32, 34) are arranged essentially not offset in relation to each other in the direction of the flap tube longitudinal axis (L) on both circumferential sides in relation to the pivot shaft (A) and provide each a stop surface (54, 58) for the associated flap wing (32, 34) on sides (52, 56) located opposite one another in the direction of the flap tube longitudinal axis (L).

## Revendications

1. Clapet de gaz d'échappement, en particulier pour le flux de gaz d'échappement d'un moteur à combustion interne, comprenant un tube de clapet (24), un diaphragme de clapet (26), qui est portée à l'intérieur du tube de clapet (24) sur un arbre de pivotement (18) pouvant tourner autour d'un axe de pivotement (A), et qui comprend deux parties de diaphragme de clapet (28, 30) de construction identique et comprenant une zone de montage (40) entourant l'arbre de pivotement (18), dans lequel chaque partie de diaphragme de clapet (28, 30) comprend une aile de clapet (32, 34) et une section de zone de montage (36, 38) de la zone de montage (40) du diaphragme de clapet (26) adaptée avec une configuration incurvée adaptée à un contour extérieur de l'arbre de pivotement (18), enfermant l'arbre de pivotement (18) dans certaines zones de sa circonférence extérieure à des zones circonférentielles opposées, dans lequel les sections de zone de montage (36, 38) des parties de diaphragme de clapet (28, 30) forment ensemble la zone de montage (40) du diaphragme de clapet (26), et dans lequel les parties de diaphragme de clapet (28, 30) sont montées dans lesdites sections de zone de montage (36, 38) sur ledit arbre de pivotement (18), dans lequel une butée d'aile (42, 44) est prévue sur la circonférence intérieure du tube de clapet (24) en association avec chaque aile de clapet (32, 34), un évidement respectif (60, 62, 64, 66) étant prévu dans les deux zones d'extrémité axiales des sections de zone de montage (36, 38) de chacune des deux parties de diaphragme de clapet (28, 30), une zone d'extrémité circonférentielle (48, 50) de la butée d'aile (42, 44) associée à l'aile de clapet (32, 34) de l'autre partie de diaphragme de clapet (30, 28) étant reçue dans chaque évidement (60, 62, 64, 66).

2. Clapet de gaz d'échappement selon la revendication 1, **caractérisé en ce que** l'arbre de pivotement (18) est monté de manière à pouvoir tourner autour de l'axe de pivotement (A) dans ses deux zones d'extrémité axiales (20, 22) sur le tube de clapet (24), et **en ce que** deux butées d'aile (42, 44) s'étendent de préférence sans interruption dans la direction circonférentielle à partir d'une première zone d'extrémité circonférentielle (48), qui est positionnée dans la zone d'une première zone d'extrémité axiale (20) de l'arbre de pivotement (18), à une deuxième zone d'extrémité circonférentielle (50), qui est positionnée dans la zone d'une deuxième zone d'extrémité axiale (22) de l'arbre de pivotement (18), et présentent une surface de butée (54, 58) pour l'appui de l'aile de clapet associée (32, 34).

3. Clapet de gaz d'échappement selon la revendication 2, **caractérisé en ce que** chaque butée d'aile (42, 44) présente, dans ses zones d'extrémité circonférentielles (48, 50), une distance circonférentielle par rapport à la zone d'extrémité axiale associée (20, 22) de l'arbre de pivotement (18), et **en ce qu'**une fente (68), qui est formé par cette distance circonférentielle entre l'axe de pivotement (18) et la butée d'aile (42, 44), est essentiellement complètement recouvert dans la direction circonférentielle par une aile de clapet (32, 34) lorsque l'aile de clapet (32, 34) bute sur la surface de butée (54, 58) de cette butée d'aile (42, 44).

4. Clapet de gaz d'échappement selon l'une des revendications précédentes, **caractérisé en ce que** dans les deux zones d'extrémité axiales de la zone de montage (40), chaque aile de clapet (32, 34) s'étend dans la direction axiale au-delà de la zone de montage (40) dans la zone de son évidement (60, 62, 64, 66) et/ou s'étend jusqu'à la circonférence extérieure de l'arbre de pivotement (18).

5. Clapet de gaz d'échappement selon l'une des revendications précédentes, **caractérisé en ce que** les évidements (60, 62, 64, 66) sont ouverts dans la direction axiale par rapport à l'axe de pivotement (A) et dans la direction circonférentielle en direction de l'autre partie du diaphragme de clapet (30, 28).

6. Clapet de gaz d'échappement selon l'une des revendications précédentes, **caractérisé en ce que** les ailes de clapet (32, 34) des deux parties de diaphragme de clapet (28, 30) sont disposées de manière décalée l'une par rapport à l'autre dans la direction d'un axe longitudinal de tube de clapet (L), lorsque les ailes de clapet (32, 34) s'appuient sur les butées d'ailes (42, 44) associées.

7. Clapet de gaz d'échappement selon la revendication 6, **caractérisé en ce que** les butées d'aile (42, 44) prévues en association avec les deux ailes de clapet (32, 34) sont disposées de manière essentiellement non décalée l'une par rapport à l'autre dans la direction de l'axe longitudinal du tube de clapet (L) sur les deux côtés circonférentielles par rapport à l'axe de pivotement (A) et fournissent chacune une surface de butée (54, 58) pour l'aile de clapet (32, 34) associée sur des côtés (52, 56) opposés l'un à l'autre dans la direction de l'axe longitudinal du tube de clapet (L).
